(19) **Europäisches Patentamt / European Patent Office / Office européen des brevets**

(11) **EP 2 998 733 A1**

(12) # EUROPÄISCHE PATENTANMELDUNG

(43) Veröffentlichungstag:
**23.03.2016 Patentblatt 2016/12**

(21) Anmeldenummer: **15184280.4**

(22) Anmeldetag: **08.09.2015**

(51) Int Cl.:
*G01N 29/07* (2006.01)    *B21J 15/28* (2006.01)
*B64F 5/00* (2006.01)    *F16B 31/02* (2006.01)
*G01L 5/24* (2006.01)    *G01N 29/22* (2006.01)
*G01N 29/44* (2006.01)    *G01N 3/32* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **18.09.2014 DE 102014113504**

(71) Anmelder: **Airbus Operations GmbH**
**21129 Hamburg (DE)**

(72) Erfinder: **ROYE, Thorsten**
**21129 Hamburg (DE)**

(74) Vertreter: **Maiwald Patentanwalts GmbH**
**Elisenhof**
**Elisenstrasse 3**
**80335 München (DE)**

(54) **IDENTIFIKATION VON FEHLERHAFTEN NIETVERBINDUNGEN MITTELS ULTRASCHALL**

(57)    Die Erfindung betrifft ein Verfahren zur Identifikation einer fehlerhaften Nietverbindung bzw. eines Niets mit ungenügender statischer Restfestigkeit in einer Rumpfstruktur eines Luftfahrzeugs. Dabei ist die Rumpfstruktur zum Beispiel ein schalenförmiges Außenhautelement des Luftfahrzeugs. Das Verfahren umfasst mehrere Schritte. In einem Schritt des Verfahrens erfolgt das Bereitstellen eines Ultraschallsignals durch eine Messeinheit (32). In einem weiteren Schritt des Verfahrens wird das Ultraschallsignals über die Messeinheit (32) in einen Niet (13) der Rumpfstruktur eingebracht. In einem weiteren Schritt erfolgt das Berechnen einer Vorspannkraft des Niets (13) aus einer Laufzeitmessung des Ultraschallsignals durch den Niet (13). Ferner wird in einem weiteren Schritt entschieden, ob der Niet (13) auszutauschen ist, wenn die Vorspannung unter einem vorbestimmten ersten Schwellwert liegt. Der Schwellwert kann beispielsweise experimentell ermittelt werden und ist ein Referenzwert zur Identifikation einer fehlerhaften Nietverbindung.

Fig. 4

EP 2 998 733 A1

## Beschreibung

### Gebiet der Erfindung

Die vorliegende Erfindung betrifft die Überprüfung von Nietverbindungen in Strukturbauteilen von Luftfahrzeugen. Insbesondere betrifft die Erfindung ein Verfahren zur Identifikation einer fehlerhaften Nietverbindung in einer Rumpfstruktur eines Luftfahrzeugs sowie ein System zur Durchführung eines Verfahrens zum Identifizieren einer fehlerhaften Nietverbindung in einer Rumpfstruktur eines Luftfahrzeugs.

### Hintergrund der Erfindung

Strukturbauteile eines Flugzeugs, insbesondere schalenförmige Strukturbauteile, werden heutzutage durch Nieten miteinander verbunden. Beispielsweise werden schalenförmige Segmente der Flugzeugaußenhaut durch eine Vielzahl von Nieten miteinander verbunden, die während des Betriebs des Flugzeugs hohen Belastungen ausgesetzt sind. Diese Belastungen sind oft nicht nur mechanischer Natur, sondern auch thermischer Natur, die durch das Auftreten hoher Temperaturunterschiede zwischen Bodenbetrieb und Reiseflugbetrieb des Flugzeugs entstehen. Dementsprechend werden die Nietverbindungen in bestimmten Intervallen geprüft. Da die Überprüfung durch Sichtkontrolle der einzelnen Nietverbindungen erfolgt, müssen oft Verkleidungsteile entfernt werden, damit eine Sichtprüfung möglich ist.

DE 10 2010 013 515 B4 beschreibt eine Bohr- und Nietvorrichtung sowie ein Nietverfahren zum Verbinden von zwei oder mehreren Bauteilen in der Strukturmontage im Flugzeugbau.

DE 10 2012 202 242 A1 beschreibt ein Verfahren zum Fügen von Formteilen mit einem Stanzniet, wobei in einem Schritt ein radiales Aufweiten eines Abschnitts eines gestanzten Loches erfolgt.

### Zusammenfassung der Erfindung

Es ist eine Aufgabe der vorliegenden Erfindung, ein verbessertes Verfahren und ein verbessertes System zur Überprüfung einer Nietverbindung in einer Rumpfstruktur eines Flugzeugs bereitzustellen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß der Erfindung ist ein Verfahren zur Identifikation einer fehlerhaften Nietverbindung bzw. eines Niets mit ungenügender statischer Restfestigkeit in einer Rumpfstruktur eines Luftfahrzeugs angegeben. Das Verfahren kann mehrere Schritte aufweisen. In einem Schritt des Verfahrens erfolgt das Bereitstellen eines Ultraschallsignals durch eine Messeinheit. In einem weiteren Schritt des Verfahrens wird das Ultraschallsignal mittels der Messeinheit in einen Niet der Rumpfstruktur eingebracht. Ferner erfolgt in einem weiteren Schritt des Verfahrens das Berechnen eines Vorspannwertes des Niets aus einer Laufzeitmessung des Ultraschallsignals durch den Niet, wobei der Vorspannwert mit einer Vorspannkraft korrespondiert. Insbesondere kann der Vorspannwert auch die Vorspannkraft selbst darstellen. In einem weiteren Schritt erfolgt das Vergleichen des Vorspannwertes mit einem ersten Schwellwert. In einem weiteren Schritt wird basierend auf dem Vergleich des Vorspannwertes mit dem ersten Schwellwert entschieden, ob der Niet auszutauschen ist.

Die Entscheidung, ob der Niet auszutauschen ist, kann von der Vorspannung des Niets bzw. der Nietverbindung abhängig sein. Beispielsweise wird entschieden, den Niet auszutauschen, wenn die Vorspannung unter den ersten Schwellwert liegt oder wenn die Differenz zwischen der Laufzeit des Ultraschallsignals durch den vorgespannten Niet und der Laufzeit des Ultraschallsignals desselben Niets im unverbauten bzw. ungespannten Zustand einen bestimmten Wert unterschreitet. Der erste Schwellwert kann zum Beispiel ein vorbestimmter erster Schwellwert sein. Der Schwellwert kann beispielsweise experimentell ermittelt werden und ist ein Referenzwert zur Identifikation einer fehlerhaften Nietverbindung. Mit anderen Worten wird bei dem beschriebenen Verfahren ein experimentell oder heuristisch ermittelter Wert einer Vorspannkraft mit der aktuellen Vorspannkraft verglichen. Es kann somit eine Differenz zwischen dem experimentell oder heuristisch ermittelten Wert der Vorspannkraft und der aktuellen Vorspannkraft bestimmt werden, anhand der eingeschätzt werden kann, ob der Niet ausgetauscht werden sollte.

Eine fehlerhafte Nietverbindung liegt beispielsweise dann vor, wenn die Nietverbindung, das heißt der Niet, eine Vorspannung aufweist, die unter dem vorbestimmten ersten Schwellwert liegt.

Die Messeinheit ist beispielsweise ein Ultraschallprüfkopf, durch den ein Ultraschallsignal in einen Prüfkörper eingebracht wird. Der Ultraschallprüfkopf, welcher im Folgenden auch als Prüfkopf bezeichnet wird, bringt also ein Ultraschallsignal in den Niet ein, so dass das Ultraschallsignal durch den Niet hindurchdringt. Dazu wird der Prüfkopf zum Beispiel durch das Bedienpersonal an den Nietkopf gehalten, so dass das Ultraschallsignal über ein Koppelmedium in den Niet gelangt. Die Messeinheit, das heißt der Prüfkopf, kann also per Hand bedienbar sein und somit durch das Bedienpersonal einfach an die zu überprüfenden Stellen gehalten werden. Die Messeinheit ist dabei insbesondere nicht im Prüfkörper, das heißt im Befestigungsmittel bzw. der Nietverbindung, integriert. Mit anderen Worten stellt der Prüfkopf das Messinstrument dar und nicht der Prüfkörper. Dadurch können die Herstellungskosten sowie das Gewicht der Nietverbindung gering gehalten werden, da nicht jeder Niet mit einem eigenen Sensor ausgestattet ist. Der Zeitaufwand bei der Wartung wird durch das manuelle Prüfen der einzelnen Niete mittels des Prüfkopfs nicht wesentlich beeinträchtigt, da die Niete während der Wartung in der Regel ohnehin einer Sichtprüfung unterzogen werden. Dabei kann die Übertragung des Ultraschallsignals vom Prüfkopf in den Niet zum Beispiel über eine piezoelektrische Schicht erfolgen. Bei dem hier beschriebenen Verfahren wird jedoch vorzugsweise keine piezoelektrische Schicht zwischen dem Prüfkopf und dem Niet vorgesehen. Dadurch, dass keine piezoelektrische Schicht auf die Niete aufgebracht wird, kann die Bestimmung der Vorspannkräfte der Niete schneller erfolgen, als wenn auf jeden Niet die piezoelektrische Schicht aufgebracht werden würde. Wenn das Ultraschallsignal in den Niet eingebracht wurde, wandert dieses mit einer bestimmten Geschwindigkeit durch den Niet hindurch und wird an dessen Grenzflächen reflektiert. Wird ein Ultraschallsignal zum Beispiel vom Nietkopf her eingebracht, so wandert das Ultraschallsignal durch den Niet bis zu einem gegenüberliegenden Nietende, wo es an einer Phasengrenzfläche oder Bauteilgrenzfläche reflektiert wird und anschließend wieder zurück zum Prüfkopf gelangt. Aus der Laufzeit des Ultraschallsignals innerhalb des Niets kann durch die Messeinheit wiederum der Vorspannwert bzw. die Vorspannkraft der Nietverbindung berechnet werden.

Mit Vorspannung ist diejenige Kraft gemeint, welche die durch den Niet zu verbindenden Strukturbauteile des Rumpfes zusammenhält. Die Vorspannkraft kann daher auch als Klemmkraft bezeichnet werden. Bei der Vorspannung des Niets während der Montage kommt es zu einer geometrischen Längung des Niets, so dass sich die Laufzeit des Ultraschallsignals bei steigender Vorspannung vergrößert. Hinzu kommen sogenannte akusto-elastische Effekte, welche die Abnahme der Geschwindigkeit des Ultraschallsignals im Niet bei zunehmender Vorspannung beschreiben. Durch Korrosionsprozesse, Kriecheffekte, Relaxationsprozesse oder auch Alterungsprozesse kann die Vorspannung, das heißt die Vorspannkraft des Niets bzw. der Nietverbindung mit der Zeit abnehmen, also zum Beispiel während des Betriebs des Luftfahrzeugs. Kriecheffekte treten insbesondere bei einer Matrix aus kohlenstofffaserverstärktem Kunststoff (CFK) unter konstanter Spannung bzw. Klemmkraft auf. Somit kann die Vorspannung unter den vorbestimmten ersten Schwellwert, der zum Beispiel eine Mindestvorspannung des Niets angibt, absinken. Mit dem beschriebenen Verfahren ist es möglich, eine Entscheidung darüber zu treffen, ob ein Niet ausgetauscht werden muss, wenn zum Beispiel die Vorspannung dieses Niets unter den vorbestimmten ersten Schwellwert gesunken ist. Eine Grundlage der Entscheidung kann also der Vergleich des Vorspannwertes mit dem ersten Schwellwert sein. Die Entscheidung kann zum Beispiel durch die Messeinheit in Form einer Empfehlung oder einer Aufforderung an das Bedienpersonal erfolgen. Der Schwellwert kann dabei abhängig vom Flugzeugtyp, vom Wartungsintervall, aber auch vom Material, sein.

Durch die Nietverbindung werden beispielsweise schalenförmige oder plattenförmige Elemente einer Flugzeugrumpfstruktur zusammengehalten. Eine fehlerhafte Nietverbindung liegt beispielsweise dann vor, wenn die Vorspannung unter dem vorbestimmten ersten Schwellwert liegt. Da ein Flugzeug eine Vielzahl von Nietverbindungen und damit eine Vielzahl von Nieten aufweist, kann durch das beschriebene Verfahren die Überprüfung, das heißt die Identifikation von fehlerhaften Nietverbindungen, das heißt von Nieten mit ungenügender statischer Restfestigkeit, schnell und zuverlässig durchgeführt werden. Es ist ferner nicht erforderlich, dass etwaige Verkleidungsteile an der Flugzeugrumpfstruktur abmontiert werden müssen, um eine Überprüfung der Vorspannung mit dem beschriebenen erfindungsgemäßen Verfahren durchführen zu können.

Der Niet kann zum Beispiel ein Schraubniet sein. Es ist außerdem möglich, dass der Niet ein Material aufweist, welches ausgewählt ist aus der Gruppe bestehend aus Metall, Kunststoff und Faserverbundwerkstoffe. Insbesondere kann auch die Rumpfstruktur zumindest teilweise aus faserverstärktem Kunststoff, das heißt kohlenstofffaserverstärktem Kunststoff, gefertigt sein. Es sei angemerkt, dass das Verfahren zur Identifizierung von fehlerhaften Nietverbindungen nicht nur bei schalenförmigen Bauteilen des Rumpfes des Luftfahrzeugs verwendet werden kann, sondern auch bei anderen Strukturbauteilen des Luftfahrzeugs oder auch bei bodengebundenen Fahrzeugen.

Gemäß einer Ausführungsform der Erfindung ist die Messeinheit ein Handgerät und nicht ganz oder teilweise im Niet integriert.

Die Messeinheit ist also nicht im Prüfkörper, das heißt im Befestigungsmittel bzw. der Nietverbindung, integriert. Mit anderen Worten stellt der Prüfkopf das Messinstrument dar und nicht der Prüfkörper.

Gemäß einer Ausführungsform der Erfindung ist das Verfahren ein Wartungsverfahren zum Warten des Luftfahrzeugs.

Dabei kann das Luftfahrzeug in bestimmten Zeitintervallen gewartet werden. Beispielsweise ist es möglich, dass das Luftfahrzeug bzw. das Flugzeug im Rahmen bestimmter vordefinierter Wartungsarbeiten überprüft wird. Dies erfolgt beispielsweise bei sogenannten A-, B-, C-, D-Checks. Bei diesen Wartungsarbeiten können auch die Nietverbindungen bzw. die Nieten sowie deren Vorspannkraft in der Rumpfstruktur des Flugzeugs überprüft werden. In diesem Sinne kann das hier beschriebene Verfahren auch ein Wartungsverfahren sein, bei dem fehlerhafte Nietverbindungen, das heißt Nietverbindungen, deren Vorspannung einen bestimmten ersten Schwellwert unterschreiten, identifiziert werden können. Nach einer Identifikation können die fehlerhaften Niete zum Beispiel in einem weiteren Verfahrensschritt durch neue Niete ausgetauscht werden. Das Verfahren kann jedoch auch ein Qualitätssicherungsverfahren in der Fertigung sein, bei dem nicht nur fehlerhafte Nietverbindungen identifiziert werden, sondern auch die Vorspannkräfte derjenigen Nieten evaluiert werden, die eine ausreichende Vorspannung besitzen, so dass der erste Schwellwert nicht unterschritten ist und daher auch der Niet nicht auszutauschen ist. Dadurch können diejenigen Nieten bestimmt werden, deren Vorspannkraft zwar über dem vorbestimmten ersten Schwellwert liegt, jedoch aufgrund einer schnellen Abnahme der Vorspannkraft als kritisch zu bewerten sind. Beispielsweise verlieren Niete an bestimmten Positionen der Rumpfstruktur des Luftfahrzeugs schneller ihre Vorspannkraft, als andere Niete. Solche Niete könnten als kritisch zu bewerten sein.

Es ist möglich, dass bei einer Vielzahl von Nietverbindungen in der Rumpfstruktur des Luftfahrzeugs die Vorspannkraft zumindest eines Teils der Vielzahl an Nieten gemessen wird. Die gemessenen Vorspannkräfte der einzelnen Nieten in der Rumpfstruktur des Luftfahrzeugs können zum Beispiel durch die Messeinheit gespeichert werden. Eine Messung der Vorspannkraft ist gemäß dem beschriebenen Verfahren nicht nur während des Vorspannens des jeweiligen Niets möglich, sondern auch zu anderen Zeitpunkten, an denen die Vorspannkraft des Niets lediglich überprüft wird.

Gemäß einer Ausführungsform der Erfindung erfolgt das Verfahren mehrere Tage nach Herstellung der Nietverbindung.

Das Herstellen der Nietverbindung erfolgt zum Beispiel in einem separaten Schritt, bei dem durch Erzeugen der Vorspannung die beispielsweise schalenförmigen Elemente der Rumpfstruktur des Luftfahrzeugs miteinander verbunden werden. Um die Vorspannung der Niete der einzelnen Nietverbindungen auch nach der Herstellung überprüfen zu können, kann mithilfe des Verfahrens die Vorspannkraft der Niete berechnet werden bzw. bestimmt werden, ob diese ausreichend ist. Dieses Überprüfen kann zum Beispiel mehrere Tage, aber auch mehrere Monate oder Jahre nach dem Herstellen der Nietverbindung erfolgen. Dies ist zum Beispiel der Fall, wenn eine Wartung an dem Flugzeug durchgeführt wird. Somit kann der Zusammenbau der Rumpfstruktur durch Herstellen der Nietverbindung und die Überprüfung der Nietverbindung zu einem späteren Zeitpunkt in zwei separaten Verfahrensschritten erfolgen. Diese Überprüfung oder die Identifikation einer fehlerhaften Nietverbindung kann bezüglich jeder einzelnen oder zumindest einem Teil der Vielzahl an Nietverbindungen vorgenommen werden.

Gemäß einer weiteren Ausführungsform der Erfindung weist das Verfahren in einem weiteren Schritt das Speichern des berechneten Vorspannwertes bzw. der berechneten Vorspannkraft durch die Messeinheit auf.

Beispielsweise kann die berechnete Vorspannkraft eines Niets bzw. einer Nietverbindung in der Messeinheit gespeichert werden. Es ist ferner möglich, dass die Vorspannkräfte jedes einzelnen Niets oder zumindest eines Teils der Vielzahl an Nieten durch die Messeinheit gespeichert werden. Die Messeinheit ist zum Beispiel das Prüfgerät, an welchem der Prüfkopf zum Einbringen des Ultraschallsignals angebracht ist. Die Messeinheit, das heißt das Prüfgerät, kann beispielsweise tragbar sein, so dass das Bedienpersonal der Messeinheit beispielsweise durch Verbinden des Prüfgerätes mit dem zu überprüfenden Niet eine möglicherweise fehlerhafte Nietverbindung identifizieren kann. Das Herstellen der Verbindung zwischen Niet und Prüfgerät kann über ein Koppelmedium erfolgen. Jedoch kann diese Verbindung auch ohne Koppelmedium hergestellt werden. Neben dem Speichern der berechneten Vorspannkraft des jeweiligen Niets durch die Messeinheit kann jedoch auch eine zentrale Speichereinheit vorgesehen sein, an die das Messgerät angeschlossen wird, um die gemessenen Vorspannkräfte der jeweiligen Niete zentral abzuspeichern.

Gemäß einer Ausführungsform der Erfindung wird der berechnete Vorspannwert bzw. die berechnete Vorspannkraft des Niets durch die Messeinheit an eine Servereinheit übertragen. In einem weiteren Schritt wird der berechnete Vorspannwert bzw. die berechnete Vorspannkraft des Niets auf einer mit der Servereinheit verbundenen Speichereinheit gespeichert.

Die Servereinheit ist zum Beispiel ein Prozessor. Ferner ist die Servereinheit dazu ausgeführt, einen Wert der berechneten Vorspannkraft des Niets mittels kabelloser Datenübertragung von der Messeinheit zu empfangen. Durch die Servereinheit kann anschließend eine Datenverarbeitung stattfinden, so dass nach dem Empfang eines Wertes der Vorspannkraft eines Niets festgestellt werden kann, ob die berechnete Vorspannung unter dem vorbestimmten ersten Schwellwert liegt. Der vorbestimmte erste Schwellwert der Vorspannkraft kann beispielsweise ein Referenzwert sein, der anhand experimenteller Daten ermittelt wurde. Der vorbestimmte erste Schwellwert kann jedoch auch ein gemessener Wert der Vorspannkraft desselben Nietes im unverbauten Zustand, also ohne Vorspannung sein, wodurch eine hohe Genauigkeit erreicht werden kann. Die Datenverarbeitung kann auch das Identifizieren von fehlerhaften Nietverbindungen einer Vielzahl von Nietverbindungen in der Rumpfstruktur des Luftfahrzeugs umfassen. Die Servereinheit kann die empfangenen Werte für die Vorspannkräfte der einzelnen Niete auch in einer Speichereinheit abspeichern, wo sie zu Vergleichszwecken abgerufen werden können.

Gemäß einer weiteren Ausführungsform der Erfindung wird ein Niet, dessen Vorspannung über dem ersten Schwellwert liegt, aber unter einem vorbestimmten zweiten Schwellwert liegt, gekennzeichnet.

Dieses Kennzeichnen kann beispielsweise durch die Messeinheit oder aber auch durch die zentrale Servereinheit erfolgen, wenn der Wert der Vorspannung des Niets von der Messeinheit an die Servereinrichtung übertragen wurde. Liegt die Vorspannung unter dem vorbestimmten ersten Schwellwert, so wird in einem Schritt des Verfahrens entschieden, dass der Niet auszutauschen ist. Liegt die Vorspannung über dem vorbestimmten zweiten Schwellwert, so wird gemäß des Verfahrens entschieden, dass der Niet nicht ausgetauscht wird. Liegt jedoch die Vorspannung über dem vorbestimmten ersten Schwellwert und unter dem vorbestimmten zweiten Schwellwert, das heißt zwischen dem vorbestimmten ersten Schwellwert und dem vorbestimmten zweiten Schwellwert, so kann eine Warnung ausgegeben werden, die angibt, dass der vorbestimmte erste Schwellwert demnächst erreicht wird. Beispielsweise kann die Zeitspanne bis zum Erreichen des vorbestimmten ersten Schwellwertes aufgrund früher berechneter Vorspannungen oder Erfahrungswerten und der Abnahme der Vorspannung für denselben Niet bestimmt werden. Diese Warnung kann beispielsweise über eine Anzeigeeinheit für das Bedienpersonal in graphischer Form angezeigt werden. Bei einer solchen Warnung wird dann angezeigt, wann der Niet eine kritische Vorspannung unterschreitet und/oder dass ein Austausch des Niets zum derzeitigen Zeitpunkt jedoch noch nicht erforderlich ist. Es ist somit ein Toleranzbereich angegeben, mit dem angegeben werden kann, ob ein bestimmter Niet bezüglich seiner Vorspannkraft als kritisch zu bewerten ist, beispielsweise weil seine Vorspannung innerhalb des Zeitraums bis zur nächsten Wartung unter den vorbestimmten ersten Schwellwert sinkt. Es kann also auch eine Klassifikation erfolgen, durch welche die Niete in bestimmte Risikogruppen unterteilt werden. Mit anderen Worten bedeutet dies, dass bestimmte Niete in der Rumpfstruktur schneller ihre Vorspannkraft verlieren als andere Niete. Solche Niete können durch eine Klassifizierung besser von jenen Nieten unterschieden werden, deren Vorspannkraft über einen längeren Zeitraum anhält. Auch der vorbestimmte zweite Schwellwert kann abhängig vom Flugzeugtyp, vom Wartungsintervall, aber auch vom Material, sein.

Wird entschieden, dass der Niet ausgetauscht wird, so kann anstelle des ausgetauschten Niets ein neuer Niet mit einem dickeren Schaft verwendet werden. Dies kann erforderlich sein, um etwaige Beschädigungen von Bohrungen, in welche die Niete eingesenkt werden, zu kompensieren. Eine solche Beschädigung ist zum Beispiel eine Lochaufweitung des Loches oder ein Kratzer im Loch des Rumpfstrukturbauteils, in welches der Niet eingesenkt werden soll.

Gemäß einer weiteren Ausführungsform wird das Ultraschallsignal durch die Messeinheit auf Basis eines Impuls-Echo-Verfahrens bereitgestellt. Das Impuls-Echo-Verfahren ist zum Beispiel ein Ultraschall-Impuls-Echo-Verfahren.

Durch die Verwendung des Ultraschall-Impuls-Echo-Verfahrens ist eine Auswertung der Laufzeit des Ultraschallsignals bzw. der Ultraschallwelle durch den Niet im Nanosekunden-Bereich möglich. Dadurch kann trotz etwaiger Streuungseffekte bei einem Schraubniet die Differenz zwischen dem vorbestimmten ersten Schwellwert und einem, zum Beispiel während der Überprüfung gemessenen, real vorliegenden Wert der Vorspannkraft mit hoher Genauigkeit ermittelt werden. Schraubniete können eine Kopfprägung sowie einen Innenrezess für den Installationsprozess aufweisen, wodurch Streuungseffekte auftreten können. Zu diesen Streuungsfaktoren kommt noch die zusätzliche Streuung durch den Ankopplungsvorgang, der durch ein Koppelmedium, z.B. Wasser, deutlich verbessert werden kann. Jedoch kann trotz dieser Streuungen eine klare Abschätzung darüber gewonnen werden, ob der vorliegende Niet noch eine ausreichende Vorspannung also Klemmkraft aufweist. Die Kopfprägung ist ein Identifikationsstandard der Niete im Flugzeugbau.

Gemäß einer weiteren Ausführungsform der Erfindung weist der Niet einen zylinderförmigen Schaft mit einem Außengewinde auf. Das Außengewinde erstreckt sich dabei zum Beispiel zumindest teilweise über die Mantelfläche des zylinderförmigen Schaftes. Beispielsweise ist ein Außendurchmesser des zylinderförmigen Schafts des Niets kleiner als 6,4 Millimeter. Es gibt auch eine Vielzahl größerer Niete, das heißt Niete mit größerem Außendurchmesser und/oder längere Niete, die durch das Verfahren geprüft werden können. Es ist möglich, dass das gemessene Ergebnis der Vorspannkraft umso besser ist, je dicker und/oder länger der Niet ist. Vorteil dieses Verfahrens ist es, dass sowohl dicke und dünne Niete mit einer hohen Genauigkeit geprüft werden können. Es können jedoch auch Schrauben und Bolzen geprüft werden mit dem Verfahren geprüft werden. Der Niet weist an einem ersten Nietende einen Nietkopf mit einer Prägung und an einem zweiten Nietende eine Aussparung auf. Beispielsweise ist die Aussparung eine Bohrung in einer Stirnfläche des zylinderförmigen Schafts des Niets. Die Aussparung wird auch als Innenrezess bezeichnet. Beispielsweise befindet sich das Außengewinde am zylinderförmigen Schaft im Bereich des zweiten Nietendes, so dass im Bereich des ersten Nietendes kein Außengewinde vorhanden ist. Der Nietkopf kann ebenfalls eine zylinderförmige Komponente aufweisen, dessen Durchmesser größer ist als der des zylinderförmigen Schafts. Ein durch die Messeinheit bzw. den Prüfkopf in den Niet eingebrachtes Ultraschallsignal gelangt zuerst in den Nietkopf und wandert anschließend zum zweiten Nietende. Im Bereich des zweiten Nietendes, das heißt im Bereich der Aussparung, wird das Ultraschallsignal reflektiert und gelangt wiederum zurück zum Nietkopf, so dass das Ultraschallsignal nach dem Austritt aus dem Nietkopf wieder in den Prüfkopf gelangt. Zwischen Prüfkopf und Nietkopf kann dabei auch ein Koppelmedium zur Übertragung des Ultraschallsignals vom Prüfkopf in den Nietkopf und umgekehrt vorgesehen sein. Aus einer Laufzeitmessung des Ultraschallsignals in dem Niet kann über ein Berechnungsverfahren die Vorspannkraft des Niets berechnet werden.

Gemäß einer weiteren Ausführungsform der Erfindung ist der Niet ein Hi-Lite oder ein Hi-Lok. Diese Art von Nieten werden unter anderem typischerweise in der Luftfahrt zum Fügen von schalenförmigen Segmenten von Rumpfteilen verwendet. Der Niet ist also in Form eines Passniets mit einem Gewinde ausgeführt, an dem eine Mutter bzw. ein Schließring, angeschraubt wird.

Gemäß der Erfindung ist ein System zur Durchführung eines Verfahrens zum Identifizieren einer fehlerhaften Nietverbindung in einer Rumpfstruktur eines Luftfahrzeugs angegeben. Das System weist eine Messeinheit auf. Die Messeinheit ist dazu ausgeführt, ein Ultraschallsignal bereitzustellen und das Ultraschallsignal in einen Niet einzubringen. Die Messeinheit ist ferner dazu ausgeführt, einen Vorspannwert des Niets aus einer Laufzeitmessung des Ultraschallsignals durch den Niet zu berechnen, wobei der Vorspannwert mit einer Vorspannkraft korrespondiert. Die Messeinheit ist dazu ausgeführt, den Vorspannwert mit einem ersten Schwellwert zu vergleichen. Zudem kann der berechnete Vorspannwert durch die Messeinheit gespeichert werden.

Mit einem solchen System ist es möglich, die Vorspannkräfte mehrerer Niete an einer Rumpfstruktur eines Flugzeugs zu ermitteln und die ermittelten Werte zur Identifikation von fehlerhaften Nietverbindungen zu nutzen. Durch das Speichern der berechneten Vorspannkräfte einzelner Nieten in der Messeinheit können auch Veränderungen der Vorspannkräfte der einzelnen Nieten über einen bestimmten Zeitraum festgestellt werden. Beispielsweise können in aufeinanderfolgenden Wartungsintervallen durchgeführte Messungen miteinander oder mit den gemessenen Werten direkt nach der Installation im Fertigungsbetrieb verglichen werden.

Gemäß einer Ausführungsform der Erfindung weist das System ferner eine Servereinheit und eine Speichereinheit auf. Die Messeinheit ist dazu ausgeführt, den berechneten Vorspannwert des Niets an die Servereinheit zu übertragen und die Servereinheit ist dazu ausgeführt, den berechneten Vorspannwert des Niets auf der mit der Servereinheit verbundenen Speichereinheit zu speichern. Dies gilt auch für die Vorspannwerte oder Vorspannkräfte einer Vielzahl von Nieten.

Somit können die berechneten Vorspannkräfte einer Vielzahl von Nieten in der Rumpfstruktur des Luftfahrzeugs in einer zentralen Servereinheit abgelegt werden. Eine Veränderung der Vorspannkräfte kann zum Beispiel durch zeitlich versetztes Messen der Vorspannkräfte derselben Nieten ermöglicht werden. Es ist auch möglich, dass von der zentralen Servereinheit diejenigen Niete identifiziert werden, deren Vorspannung unter einem vorbestimmten ersten Schwellwert liegt. Durch das Kennzeichnen der als fehlerhaft identifizierten Niete, das heißt die Niete, deren Vorspannung unter dem vorbestimmten ersten Schwellwert liegt, kann dem Wartungspersonal angezeigt werden, welche Niete ausgewechselt werden müssen.

Gemäß einer Ausführungsform der Erfindung ist die Messeinheit ein Handgerät und nicht ganz oder teilweise im Niet integriert.

**Kurze Beschreibung der Figuren**

Beispielhafte Ausführungsformen werden im Folgenden mit Bezugnahme auf die folgenden Figuren beschrieben.

Fig. 1 zeigt ein Flussdiagramm für ein Verfahren zur Identifikation einer fehlerhaften Nietverbindung in einer Rumpfstruktur eines Luftfahrzeugs gemäß einem Ausführungsbeispiel der Erfindung.

Fig. 2 zeigt eine perspektivische Ansicht eines Schraubniets ohne Collar bzw. Mutter zum Verbinden von Rumpfstrukturbauteilen eines Luftfahrzeugs und eine Messeinheit zum Messen der Vorspannkraft des Niets gemäß einem Ausführungsbeispiel der Erfindung.

Fig. 3 zeigt eine Schnittansicht eines Niets zum Verbinden von Rumpfstrukturbauteilen eines Luftfahrzeugs und eine Messeinheit zum Messen der Vorspannkraft des Niets gemäß einem Ausführungsbeispiel der Erfindung.

Fig. 4 zeigt ein System zur Durchführung eines Verfahrens zum Identifizieren einer fehlerhaften Nietverbindung in einer Rumpfstruktur eines Flugzeugs gemäß einem Ausführungsbeispiel der Erfindung.

**Detaillierte Beschreibung beispielhafter Ausführungsformen**

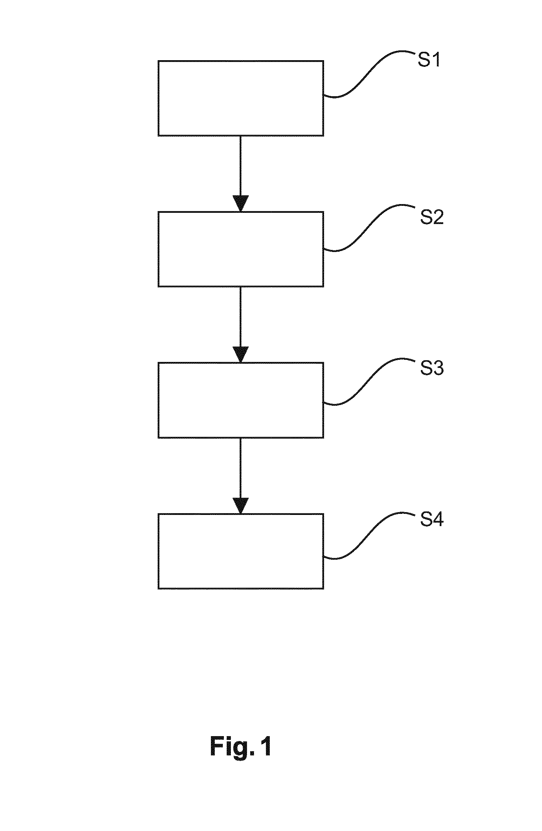

Fig. 1 zeigt ein Flussdiagramm für ein Verfahren zur Identifikation einer fehlerhaften Nietverbindung in einer Rumpfstruktur eines Luftfahrzeugs. Das Verfahren weist mehrere Schritte auf, die im Folgenden beschrieben sind. Jedoch sei angemerkt, dass das Verfahren auch weitere Schritte umfassen kann, welche nicht explizit genannt sind. Ebenso kann die Reihenfolge der Schritte beliebig sein.

In einem Schritt (S1) des Verfahrens erfolgt das Bereitstellen eines Ultraschallsignals durch eine Messeinheit. Die Messeinheit kann ein Prüfgerät mit einem Ultraschallprüfkopf sein. Der Ultraschallprüfkopf kann zum Beispiel durch das Bedienpersonal oder das Wartungspersonal bei einer Überprüfung der Nietverbindung direkt an die Nietverbindung bzw. einen Niet der Nietverbindung herangehalten werden, so dass ein Kontakt oder eine Verbindung zwischen den Niet und dem Prüfkopf hergestellt werden kann. Das Ultraschallsignal kann zum Beispiel mit Hilfe eines Impuls-Echo-Verfahrens bereitgestellt werden.

In einem weiteren Schritt (S2) des Verfahrens wird das Ultraschallsignal durch die Messeinheit in den Niet der Rumpfstruktur eingebracht. Ein Niet der Rumpfstruktur bezeichnet dabei einen Niet, der zwei z.B. schalenförmige Strukturbauteile, wie die der Rumpfaußenhaut oder anderer Schubwandelemente, miteinander verbindet. Durch den Niet wird also eine bestimmte Vorspannung, die auch als Klemmkraft bezeichnet wird, erzeugt und damit das Zusammenhalten der beiden schalenförmigen Strukturbauteile gewährleistet. Es sei jedoch angemerkt, dass das hier beschriebene Verfahren nicht auf die Identifikation von fehlerhaften Nietverbindungen in schalenförmigen Strukturbauteilen des Rumpfes des Luftfahrzeugs beschränkt ist, sondern auch fehlerhafte Nietverbindungen anderer Bauteile im Luftfahrzeug identifiziert werden können.

Generell können alle Nietverbindungen der primären aber auch sekundären Struktur eines Flugzeugs analysiert werden. Beispiele hierfür sind Vollmaterialien, also zum Beispiel Lockbolt pull-type, Lockbolt stump-type, Hi-Lite, Hi-Lok, Veri-Lite, Vollniete, Blindniete usw. Beispiele für Strukturelemente eines Flugzeugs, die durch Niete miteinander verbunden werden, sind alle Primärstrukturen. Bei der Rumpfschalenmontage gibt es beispielsweise Verbindungsmöglichkeiten für Schale an Stringer, Schale an Clip, Schale an Spant, Clip an Spant usw. Bei der Seitenleitwerksmontage und bei der Höhenleitwerksmontage gibt es ebenfalls Verbindungsmöglichkeiten für Schale an Tie, Tie an Rippe und Verkleidung an Schale. Die Flügelmontage umfasst eine Verbindung von Schale an Rippen usw. Ferner können Nietverbindungen zur Verbindung von Systemanbauten, Sekundärstrukturen, wie zum Beispiel eine genietete Haltermontage, verwendet werden. Verbindungstätigkeiten in der Endlinie, wie beispielsweise Flügel an Rumpf, Sektion an Sektion usw. kommen für eine Verbindung durch Nieten ebenfalls in Betracht.

In einem weiteren Schritt (S3) des Verfahrens erfolgt das Berechnen einer Vorspannkraft des Niets aus einer Laufzeitmessung des Ultraschallsignals durch den Niet. Die Berechnung kann dabei zum Beispiel durch die Messeinheit, also das Prüfgerät selbst, erfolgen.

Es wird also die Laufzeit des in den Niet eingebrachten Ultraschallsignals gemessen, um daraus eine die Vorspannkraft zum Beispiel aus einem mathematischen

Zusammenhang berechnen zu können. Die Berechnung der Vorspannkraft kann zum Beispiel über den folgenden Zusammenhang abgeschätzt werden:

$$F_V[N] = 1{,}5 \frac{N}{ns} \cdot t[ns]$$

Dabei ist t die Laufzeit des Ultraschallsignals und N steht für Newton und ns steht für Nanosekunden. Durch experimentelle Versuche und/oder durch Erfahrungswerte können auch mathematisch komplexe Modelle entwickelt werden, mit denen eine klare Abschätzung der Vorspannkraft abgegeben werden kann. Die Laufzeit des Ultraschallsignals im Niet wird durch die Geometrie des Niets bestimmt. An den Phasen- bzw. Bauteilgrenzflächen des Niets wird das Ultraschallsignal reflektiert, so dass das reflektierte Ultraschallsignal in den Prüfkopf zurückgelangt. Mit Hilfe der Zeitspanne zwischen dem Aussenden des Ultraschallsignals und dem Empfang des Ultraschallsignals durch den Prüfkopf, kann die Vorspannkraft ermittelt werden. Da insbesondere der Schaft des Niets bei zunehmender Vorspannung länger wird, erhöht sich auch die Laufzeit des Ultraschallsignals im Niet. Hinzu kommen akusto-elastische Effekte und/oder materialabhängige Effekte, die die Laufzeit des Ultraschallsignals innerhalb des Niets beeinflussen.

In einem weiteren Schritt (S4) des Verfahrens wird entschieden, dass der Niet auszutauschen ist, wenn die Vorspannung unter einem vorbestimmten ersten Schwellwert liegt. Der vorbestimmte erste Schwellwert ist zum Beispiel derjenige Grenzwert der Vorspannung, der nicht unterschritten werden sollte, damit eine ausreichende Vorspannung durch den Niet gewährleistet werden kann. Der vorbestimmte erste Schwellwert kann über experimentell ermittelte Werte über die Vorspannung von Nieten ermittelt werden. Es ist möglich, dass der vorbestimmte erste Schwellwert einen Durchschnittswert der Vorspannung darstellt, der über eine Reihe von experimentell ermittelten Vorspannkräften einer Vielzahl von Nieten bestimmt wurde. Wenn der vorbestimmte erste Schwellwert der Vorspannkraft eines Niets unterschritten wird, kann eine Entscheidung über den Austausch des entsprechenden Niets getroffen werden. Diese Entscheidung bzw. Information kann zum Beispiel über eine Anzeige der Messeinheit vom Bedienpersonal bzw. Wartungspersonal abgelesen werden. Der Niet kann daraufhin gegen einen neuen, beispielsweise dickeren Niet ausgetauscht werden.

Die bezeichneten Verfahrensschritte können zum Beispiel erfolgen, wenn die Montage der Rumpfstruktur des Luftfahrzeugs abgeschlossen wurde. Mit anderen Worten kann eine Überprüfung der montierten Nieten in der Rumpfstruktur und damit eine Identifikation fehlerhafter Nietverbindungen durch das Verfahren erfolgen. Eine solche Überprüfung kann zum Beispiel mehrere Tage nach der Montage, in der die Nietverbindungen hergestellt wurden, durchgeführt werden, um so sicherzustellen, dass die Nietenverbindungen ordnungsgemäß vorgesehen bzw. installiert wurden. Die Überprüfung der Vorspannkraft der Niete kann aber auch mehrere Monate oder Jahre nach der Herstellung der Nietverbindung erfolgen, beispielweise im Rahmen einer Wartung des Luftfahrzeugs bzw. Flugzeugs. Eine Überprüfung kann also im Rahmen eines sogenannten A-, B-, C- oder D-Checks stattfinden.

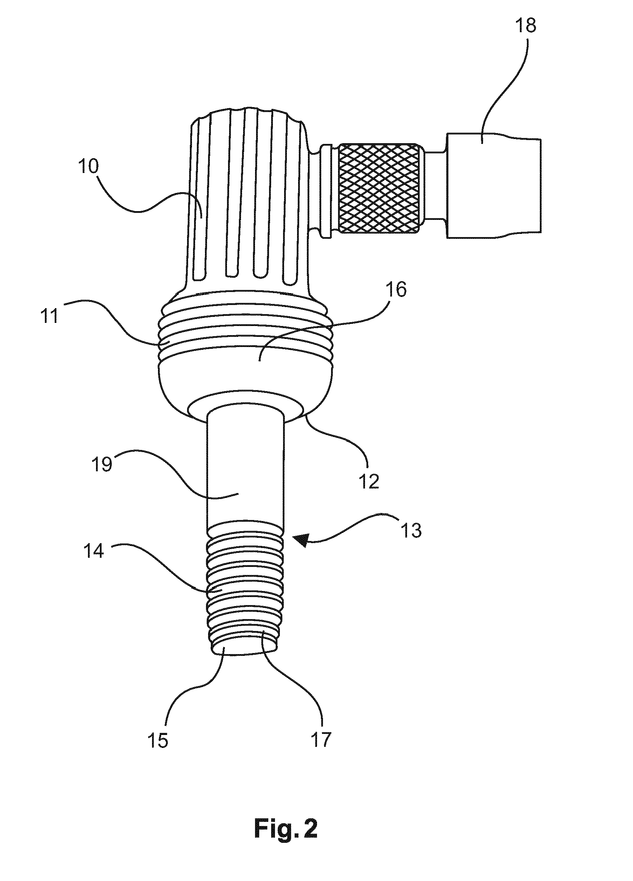

Fig. 2 zeigt eine perspektivische Ansicht eines Niets 13 zum Verbinden von Rumpfstrukturbauteilen eines Luftfahrzeugs und eine Messeinheit zum Messen der Vorspannkraft des Niets 13. Insbesondere ist ein Ultraschallprüfkopf bzw. Prüfkopf 10 der Messeinheit gezeigt, welcher über ein flexibles Verbindungselement 18 beispielsweise mit einer Eingabeeinheit und/oder einer Anzeigeeinheit verbunden ist. Die Messeinheit umfasst also zum Beispiel einen Prüfkopf 10, ein flexibles Verbindungselement 18 und eine Anzeigebedieneinheit über die das Bedienpersonal bzw. Wartungspersonal sowohl Eingaben vornehmen kann, als auch Messergebnisse, wie beispielsweise die berechnete Vorspannkraft, ablesen kann.

Der Prüfkopf 10 kann über ein Koppelmedium 11 mit dem Niet 13 verbunden sein. Insbesondere kann der Prüfkopf 10 über das Koppelmedium 11 mit einem Nietkopf 12 verbunden sein, so dass über den Prüfkopf 10 durch die Messeinheit ein Ultraschallsignal am Nietkopf 12 in den Niet 13 eingebracht werden kann. Das Ultraschallsignal bewegt sich dann ausgehend von einem ersten Ende 16 des Niets 13 hin zu einem zweiten Ende 17 des Niets 13, wo das Ultraschallsignal an einer Bauteiloberfläche des Niets 13 reflektiert wird. Nach Reflexion an einer Bauteiloberfläche des Niets 13 gelangt das Ultraschallsignal wieder zurück in den Prüfkopf 10, sodass eine Laufzeit des Ultraschallsignals im Niet 13 und über eine weitere Umrechnung die Vorspannkraft des Niets 13 berechnet werden kann. Der Niet 13 weist einen zylinderförmigen Schaft 19 auf. Dabei erstreckt sich zumindest über einen Teil der Mantelfläche des zylinderförmigen Schafts 19 ein Außengewinde 14. An einer Stirnfläche 15 des zylinderförmigen Schafts 19 im Bereich des zweiten Endes 17 des Niets 13 kann das Ultraschallsignal reflektiert werden. Aufgrund des an der Stirnfläche 15 reflektierten Ultraschallsignals, also des Rückwandechos, kann dann nach erneutem Durchlaufen des Niets 13 vom zweiten Ende 17 zum ersten Ende 16 die Laufzeit des Ultraschallsignals bestimmt werden. Je länger der Niet 13 ist, das heißt je größer die Ausdehnung zwischen dem ersten Ende 16 und dem zweiten Ende 17 des Niets 13 ist, desto länger benötigt das Ultraschallsignal um den Niet 13 zu durchlaufen. Dabei ist die Länge des Niets 13 umso größer, je größer die Vorspannung ist. Je größer die anliegende Spannung im Niet ist, desto mehr wirkt sich der akusto-elastische Effekt auf eine relative Laufzeitänderung aus. Ein größerer Einfluss des akusto-elastischen Effekts bewirkt also einen größer werdenden Einfluss auf die Erhöhung der Laufzeitänderung bei zunehmender Vorspannung des Niets 13.

Beispielsweise ist der Außendurchmesser des zylinderförmigen Schafts 19 kleiner als 6,4 Millimeter. Der Außendurchmesser des zylinderförmigen Schafts 19 beträgt in einer bevorzugten Ausführungsform 4,8 Millimeter. Der Nietkopf 12 des Niets 13 kann eine Prägung aufweisen, so dass durch die damit verbundenen Unregelmäßigkeiten in der Oberfläche des Nietkopfes 12 ungewollte Reflexionen des Ultraschallsignals, also ein sogenanntes Rauschen bzw. Streueffekte bei der Messung der Laufzeit, auftreten können. In der Stirnfläche 15 des zylinderförmigen Schafts 19 kann eine Aussparung, also ein sogenannter Innenrezess, vorgesehen sein, der ebenfalls zu ungewollten Reflexionen und somit zum Rauschen im Messsignal führen kann. Es konnte gezeigt werden, dass mit dem hier beschriebenen Verfahren trotz des Rauschens die Vorspannkraft eines Niets 13 mit hoher Genauigkeit bestimmt werden kann. Insbesondere tritt Rauschen bzw. Streuung durch ungewollte Reflexionen des Ultraschallsignals an Grenzflächen des Niets 13 am ersten Ende 16 und am zweiten Ende 17 auf. Das Außengewinde 14 erstreckt sich über einen Teil der Mantelfläche des zylinderförmigen Schafts 19, beispielsweise bis zur Stirnfläche 15 am zweiten Ende 17 des Niets 13, so dass das Nietende dem Gewindeende entspricht. Der Niet 13 ist zum Beispiel ein Hi-Lite oder ein Hi-Lok. Hi-Lites bzw. Hi-Loks werden vorzugsweise im Flugzeugbau verwendet, um Strukturbauteile miteinander zu verbinden. Der Anteil solcher Hi-Loks und Hi-Lites beträgt gemessen an der Gesamtanzahl an Befestigungselementen in einem Flugzeug bis zu 40 Prozent.

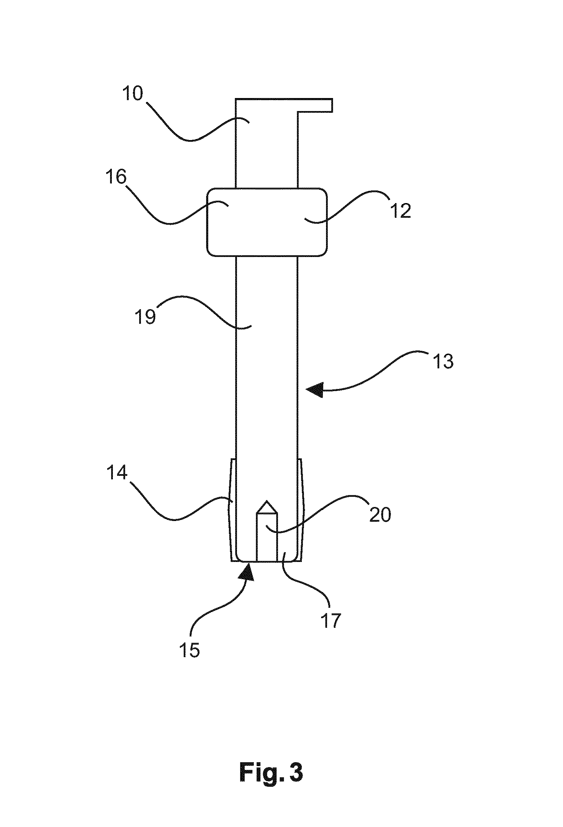

Fig. 3 zeigt eine Schnittansicht des Niets 13 ohne Mutter bzw. Collar und des Prüfkopfs 10 der Messeinheit zum Messen der Vorspannkraft des Niets 13. Der Niet 13 ist in dem beschriebenen Beispiel ein Schraubniet. Der zylinderförmige Schaft 19 des Niets 13 weist eine Mantelfläche auf, auf der sich zumindest teilweise ein Außengewinde 14 erstreckt. Das Außengewinde 14 befindet sich dabei im Bereich des zweiten Endes 17 des Niets 13. Ebenfalls am zweiten Ende 17 des Niets 13 befindet sich eine Aussparung 20, die auch als Innenrezess bezeichnet wird. Diese Aussparung 20 ist zum Beispiel eine Bohrung, die senkrecht zur Stirnfläche 15 ausgerichtet ist.

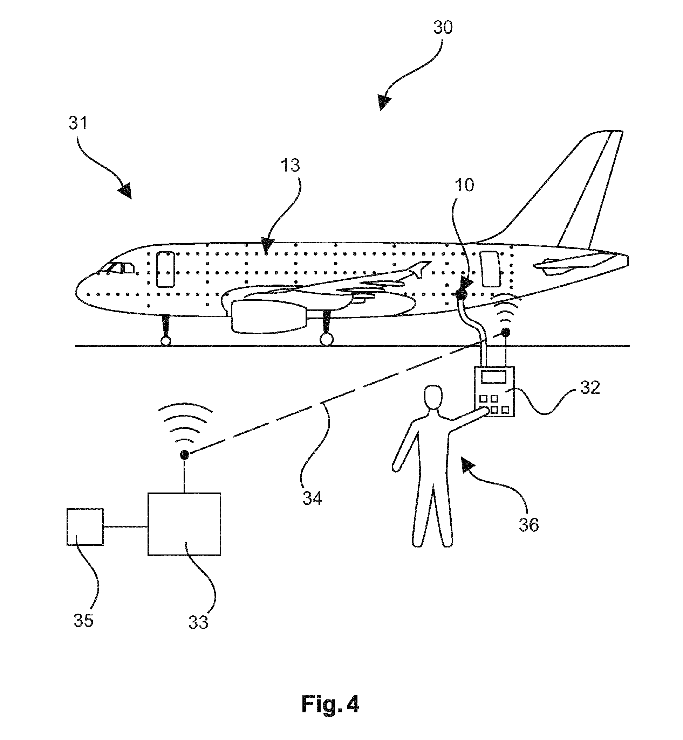

Fig. 4 zeigt ein System 30 zur Durchführung eines Verfahrens zum Identifizieren einer fehlerhaften Nietverbindung in einer Rumpfstruktur eines Flugzeugs 31. Das Flugzeug 31 weist eine Vielzahl von Nieten 13 auf, die beispielsweise auf schalenförmigen Elementen der Rumpfaußenhaut angebracht sind bzw. diese Elemente zusammenhalten. Das System 30 weist eine Messeinheit 32 auf, die dazu ausgeführt ist, ein Ultraschallsignal bereitzustellen. Die Messeinheit 32 ist ferner dazu ausgeführt, das Ultraschallsignal über einen Prüfkopf 10 der Messeinheit 32 in einen Niet 13 einzubringen und eine Vorspannkraft des Niets 13 aus einer Laufzeitmessung des Ultraschallsignals durch den Niet 13 zu berechnen. Die Messeinheit 32 ist dazu ausgeführt, die berechnete Vorspannkraft zu speichern. Die Messeinheit 32 kann tragbar sein, so dass das Bedienpersonal bzw. Wartungspersonal 36 mit der Messeinheit 32 jeden Niet 13 der Vielzahl von Nieten 13 erreichen kann. Dabei steckt das Bedienpersonal 36 den Prüfkopf 10 der Messeinheit 32 auf den zu prüfenden Niet 13. Die berechneten Vorspannkräfte der einzelnen Niete 13 der Vielzahl an Nieten 13 können in der Messeinheit 32 abgespeichert werden.

Das System 30 weist eine Servereinheit 33 und eine Speichereinheit 35 auf. Die Messeinheit 32 ist ausgeführt, die berechnete Vorspannkraft eines Niets 13 an die Servereinheit 33 zu übertragen. Die Übertragung kann dabei mittels einer kabelgestützten und/oder kabellosen Datenverbindung 34 erfolgen. Vorzugsweise ist eine kabellose Datenverbindung 34 vorgesehen, so dass die Erreichbarkeit jedes Niets 13 der Vielzahl an Nieten 13 gewährleistet werden kann. Die Servereinheit 33 ist dazu ausgeführt, die berechnete Vorspannkraft des Niets 13 auf einer mit der Servereinheit 33 verbundenen Speichereinheit 35 zu speichern. Somit ist es beispielsweise nicht erforderlich, die ermittelten Vorspannkräfte der einzelnen Niete 13 auf dem Messgerät 32 zu speichern. Fehlerhafte Nietverbindungen bzw. Niete 13, deren Vorspannkräfte kleiner als der vorbestimmte erste Schwellwert sind, können durch das System 30 gekennzeichnet werden. Beispielsweise können die Positionen der als fehlerhaft gekennzeichneten Nietverbindungen durch die Servereinheit 33 auf der Speichereinheit 35 gespeichert werden. Somit kann dem Bedienpersonal 36 eine Information über die Position eines möglicherweise auszutauschenden Niets 13 bereitgestellt werden. Durch die Servereinheit 33, welche zum Beispiel ein Prozessor ist, können auch Informationen über die voraussichtliche Zeitspanne bis zum Unterschreiten des vorbestimmten ersten Schwellwertes der Vorspannkraft der einzelnen Nieten 13, bereitgestellt werden. Dazu können für dieselben Nieten 13 die Vorspannkräfte über mehrere Messungen gespeichert werden, so dass mittels der Veränderung der Vorspannkraft über die Zeit eine Aussage über das Erreichen des vorbestimmten ersten Schwellwertes getroffen werden kann. Dazu können auch experimentell ermittelte Daten herangezogen werden.

Insbesondere können zwischen den einzelnen Messungen mehrere Tage, Monate oder Jahre liegen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Verfahren zur Identifikation einer fehlerhaften Nietverbindung in einer Rumpfstruktur eines Luftfahrzeugs, das Verfahren aufweisend die folgenden Schritte:

   Bereitstellen eines Ultraschallsignals durch eine Messeinheit (32);
   Einbringen des Ultraschallsignals in einen Niet (13) der Rumpfstruktur mittels der Messeinheit (32);
   Berechnen eines Vorspannwertes des Niets (13) aus einer Laufzeitmessung des Ultraschallsignals durch den Niet (13), wobei der Vorspannwert mit einer Vorspannkraft korrespondiert;
   Vergleichen des Vorspannwertes mit einem ersten Schwellwert; und
   Entscheiden, ob der Niet (13) auszutauschen ist, basierend auf dem Vergleich des Vorspannwertes mit dem ersten Schwellwert.

2. Verfahren nach Anspruch 1,
   wobei die Messeinheit (32) ein Handgerät ist und nicht ganz oder teilweise im Niet (13) integriert ist.

3. Verfahren nach einem der vorhergehenden Ansprüche,
   wobei das Verfahren ein Wartungsverfahren zum Warten des Luftfahrzeugs ist.

4. Verfahren nach einem der vorhergehenden Ansprüche,
   wobei das Verfahren mehrere Tage nach Herstellung der Nietverbindung erfolgt.

5. Verfahren nach einem der vorhergehenden Ansprüche, weiter aufweisend den Schritt:

   Speichern des berechneten Vorspannwertes durch die Messeinheit (32).

6. Verfahren nach einem der vorhergehenden Ansprüche, weiter aufweisend die Schritte:

   Übertragen des berechneten Vorspannwertes des Niets (32) durch die Messeinheit (32) an eine Servereinheit (33); und
   Speichern des berechneten Vorspannwertes des Niets (13) auf einer mit der Servereinheit (33) verbundenen Speichereinheit (35).

7. Verfahren nach einem der vorhergehenden Ansprüche, weiter aufweisend den Schritt:

   Kennzeichnen eines Niets (13), dessen Vorspannung über dem ersten Schwellwert liegt aber unter einem vorbestimmten zweiten Schwellwert liegt.

8. Verfahren nach einem der vorhergehenden Ansprüche:

   wobei das Ultraschallsignal durch die Messeinheit (32) auf Basis eines Impuls-Echo-Verfahrens bereitgestellt wird.

9. Verfahren nach einem der vorhergehenden Ansprüche,
   wobei der Niet (13) einen zylinderförmigen Schaft (19) mit einem Außengewinde (14) aufweist;
   wobei ein Außendurchmesser des zylinderförmigen Schafts (19) kleiner als 6,4 Millimeter ist; und
   wobei der Niet (13) an einem ersten Ende (16) einen Nietkopf (12) mit einer Prägung aufweist und an einem zweiten Ende (17) eine Aussparung (20) aufweist.

10. Verfahren nach einem der vorhergehenden Ansprüche,
    wobei der Niet ein Hi-Lite oder ein Hi-Lok ist.

11. System zur Durchführung eines Verfahrens zum Identifizieren einer fehlerhaften Nietverbindung in einer Rumpfstruktur eines Luftfahrzeugs, aufweisend:

eine Messeinheit (32);
wobei die Messeinheit (32) dazu ausgeführt ist, ein Ultraschallsignal bereitzustellen;
wobei die Messeinheit (32) dazu ausgeführt ist, das Ultraschallsignal in einen Niet (13) einzubringen;
wobei die Messeinheit (32) dazu ausgeführt ist, einen Vorspannwert des Niets (13) aus einer Laufzeitmessung des Ultraschallsignals durch den Niet (13) zu berechnen, wobei der Vorspannwert mit einer Vorspannkraft korrespondiert;
wobei die Messeinheit (32) dazu ausgeführt ist, den Vorspannwert mit einem ersten Schwellwert zu vergleichen; und
wobei die Messeinheit (32) dazu ausgeführt ist, den berechneten Vorspannwert zu speichern.

12. System nach Anspruch 11, ferner aufweisend:

eine Servereinheit (33);
eine Speichereinheit (35);
wobei die Messeinheit (32) ausgeführt ist, den berechneten Vorspannwert des Niets (13) an die Servereinheit (33) zu übertragen; und
wobei die Servereinheit (33) dazu ausgeführt ist, den berechneten Vorspannwert des Niets (13) auf der mit der Servereinheit (33) verbundenen Speichereinheit (35) zu speichern.

13. System nach einem der Ansprüche 11 bis 12, wobei die Messeinheit (32) ein Handgerät ist und nicht ganz oder teilweise im Niet (13) integriert ist.

S1

S2

S3

S4

**Fig. 1**

10

18

11

16

12

19

13

14

15

17

**Fig. 2**

**Fig. 3**

**Fig. 4**

**Europäisches Patentamt**
**European Patent Office**
**Office européen des brevets**

# EUROPÄISCHER RECHERCHENBERICHT

**Nummer der Anmeldung**

EP 15 18 4280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 521 448 B1 (UNG KEVIN Y [US] ET AL) 27. August 2013 (2013-08-27) * Zusammenfassung; Abbildungen 1-10 * * Spalte 1, Zeile 24 - Spalte 7, Zeile 65 * | 1-6,9-13 | INV. G01N29/07 B21J15/28 B64F5/00 F16B31/02 G01L5/24 |
| X | US 5 970 798 A (GLEMAN STUART M [US] ET AL) 26. Oktober 1999 (1999-10-26) * Zusammenfassung; Abbildungen 1A,3,4 * * Spalte 1, Zeile 18 - Spalte 2, Zeile 29 * | 1,11 | G01N29/22 G01N29/44 G01N3/32 |
| X | DE 20 2013 010307 U1 (AMG INTELLIFAST GMBH [DE]) 2. Dezember 2013 (2013-12-02) * Zusammenfassung; Abbildungen 1-3 * * Absätze [0018] - [0020] * | 1,5-7, 11,12 | |
| X | US 5 220 839 A (KIBBLEWHITE IAN E [US]) 22. Juni 1993 (1993-06-22) * Zusammenfassung; Abbildungen 1-10 * * Spalte 1, Zeile 10 - Spalte 7, Zeile 22 * | 1,8,9,11 | |

**RECHERCHIERTE SACHGEBIETE (IPC)**

G01N
B21J
B64F
F16B
G01L

Der vorliegende Recherchenbericht wurde für alle Patentansprüche erstellt

| Recherchenort | Abschlußdatum der Recherche | Prüfer |
|---|---|---|
| München | 4. Februar 2016 | Uttenthaler, Erich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 4280

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2016

| Im Recherchenbericht angeführtes Patentdokument | Datum der Veröffentlichung | Mitglied(er) der Patentfamilie | Datum der Veröffentlichung |
|---|---|---|---|
| US 8521448 B1 | 27-08-2013 | KEINE | |
| US 5970798 A | 26-10-1999 | KEINE | |
| DE 202013010307 U1 | 02-12-2013 | KEINE | |
| US 5220839 A | 22-06-1993 | KEINE | |

EPO FORM P0461

Für nähere Einzelheiten zu diesem Anhang : siehe Amtsblatt des Europäischen Patentamts, Nr.12/82

**EP 2 998 733 A1**

**IN DER BESCHREIBUNG AUFGEFÜHRTE DOKUMENTE**

**In der Beschreibung aufgeführte Patentdokumente**

- DE 102010013515 B4
- DE 102012202242 A1